# EUROPÄISCHE PATENTSCHRIFT

(11) **EP 0 851 950 B1**
(45) Veröffentlichungstag und Bekanntmachung des Hinweises auf die Patenterteilung: **29.09.1999**
(21) Anmeldenummer: 96933350.9
(22) Anmeldetag: 20.09.1996
(51) Int. Cl.: D21H 27/38, D21H 27/40

(54) **MEHRLAGIGES TISSUEPRODUKT MIT CTMP-INNENLAGE SOWIE DESSEN HERSTELLUNG**
MULTILAYERED TISSUE PRODUCT WITH A CTMP INNER LAYER, AND THE PRODUCTION OF SAID PRODUCT
PAPIER DE SOIE MULTICOUCHE A COUCHE INTERNE CTMP ET SA FABRICATION

(30) Priorität: 20.09.1995 DE 19534811
(43) Veröffentlichungstag der Anmeldung: 08.07.1998
(73) Patentinhaber: SCA Hygiene Products GmbH, 68305 Mannheim (DE)
(72) Erfinder: BÖTTCHER, Hans-Peter, D-64319 Pfungstadt (DE); MAULER, Dirk, D-68549 Ilvesheim (DE); VON PALESKE, Peter, D-64342 Seeheim (DE)
(74) Vertreter: Sieckmann, Ralf, Dr.
(86) Internationale Anmeldenummer: EP9604130
(87) Internationale Veröffentlichungsnummer: WO9711227

(56) Entgegenhaltungen:
- US-A- 5 087 324
- ABSTRACT BULLETIN OF THE INSTITUTE OF PAPER CHEMISTRY, Bd. 59, Nr. 5, November 1988, Seite 531 XP000030898 MUNSTER H: "REPORT ON EXPERIENCE WITH USING CTMP IN TISSUE PAPER"
- PAPER TRADE J. 169, NO. 10: 45-46 (OCT. 1985) , XP000614164 EMANUELSSON, I.: "Optimum Tissue Production Results in Lower Costs, Improved Quality"

## Beschreibung

Die Erfindung betrifft ein mehrlagiges Tissueprodukt mit wenigstens einer CTMP-lnnenlage, welche kein Naßfestmittel aufweist sowie ein Verfahren zur Herstellung derartiger Tissueprodukte.

Bei dem vorgenannten Tissueprodukt bestehen die Außenlagen im wesentlichen aus Zellstoff. Hierunter versteht man die von den Inkrusten, hauptsächlich dem Lignin, weitgehend befreiten Fasern aus Hölzern oder Einjahrespflanzen. Zellstoffe werden durch intensive chemische Behandlung aus den genannten Faserwerkstoffen gewonnen. Die Inkrusten werden beim sogenannten Kochprozeß zum überwiegenden Teil entfernt, so daß sich die einzelnen Fasern (Zellen) des pflanzlichen Faserverbundes ohne wesentliche mechanische Nachbehandlung voneinander trennen lassen. Die durch chemischen Aufschluß erhaltenen Zellstoffe, die neben ihrem Hauptbestandteil α-Zellulose noch Hemi-Zellulosen und geringe Mengen Lignin enthalten, können zusätzlich mit verschiedenen Mitteln gebleicht werden. Dabei tritt ein weiterer Aufschluß ein, bei dem noch vorhandenes Lignin ganz oder teilweise herausgelöst wird. Je nach den im Kochprozeß eingesetzten Reagenzien unterscheidet man generell zwei Aufschlußverfahren; man unterscheidet im wesentlichen den nach dem Sulfit-Aufschluß (saures Millieu) hergestellten Sulfit-Zellstoff und den nach dem Sulfat-Aufschluß (alkalisches Millieu) hergestellten Sulfat-Zellstoff. Darüber hinaus gibt es in jüngerer Zeit alternative Verfahren wie z.B. das Organosolv-Verfahren sowie eine Vielzahl von Modifikationen der altbekannten Verfahren. Die Ausbeute bei Vollzellstoffen beträgt größenordnungsmäßig 50 %.

Bei dem CTMP (Chemo-Thermo-Mechanical-Pulp) handelt es sich ebenfalls um einen Faserstoff pflanzlichen Ursprungs, der zu der Gruppe der Holzstoffe zählt. Nach einer chemisch-thermischen Vorbehandlung des Nadel- bzw. Laubholzes und anschließender mechanischer Zerfaserung unter Druck erhält man CTMP in einer Ausbeute von üblicherweise 90 bis 95 %. Bei diesem CTMP-Prozeß wird der Ligninanteil des Ausgangsstoffs Holz im Gegensatz zu den obengenannten Aufschlußverfahren der Zellstofferzeugung nur geringfügig abgebaut. Der CTMP kann ebenfalls zusätzlich mit verschiedenen Mitteln gebleicht werden. Einlagige Tissuepapiere können außer aus Zellstoff auch gänzlich oder zumindest zu einem überwiegenden Anteil aus CTMP oder HTCTMP (High Temperature CTMP) gefertigt sein und dann bei der Verarbeitung zu mehrlagigen Tissueprodukten als Innenlage(n) Verwendung finden.

Holzstoffe werden generell hergestellt durch sogenanntes Schleifen (Holzschliff = gro-und wood) oder durch Refinermahlung. Das Prinzip der mechanischen Holzstofferzeugung besteht in der Zerlegung des pflanzlichen Faserverbundes (Zellen) des Holzes in Einzelfasern mit Hilfe mechanischer Krafteinwirkung (Zerfaserung). Bei diesem Verfahren wird das gesamte Holzmaterial genutzt, indem das Lignin im Gegensatz zum chemischen Aufschluß bei der Zellstofferzeugung nahezu vollständig in den Fasern erhalten bleibt. Demzufolge sind die dann für die Tissueerzeugung zur Verfügung stehenden Fasern beziehungsweise die resultierenden Faserbruchstücke (Holzstoff) vergleichsweise kurz und steif. Die Erzeugung von thermomechanischem Holzstoff (TMP) wird durchgeführt durch Zerfaserung in Scheibenrefinern unter erhöhtem Druck durch Zuführung von Dampf. Auch bei diesem Verfahren bleibt das Lignin in den Fasern enthalten.

Ein thermomechanischer Holzstoff kann durch die Zugabe kleiner Mengen an Chemikalien, üblicherweise Sulfit, modifiziert werden, wobei diese Chemikalien vor der Zerfaserung im Refiner dem zu zerfasernden Holz (Hackschnitzel) zugegeben werden. Solche Faserrohstoffe (pulp) werden in der Literatur als chemomechanische Holzstoffe (CMP) oder als chemothermomechanische Holzstoffe (CTMP) bezeichnet. Eine Variante des CTMP, genannt HTCTMP (High temperature-CTMP) wird beschrieben in der Internationalen Patentanmeldung PCT/SE 91/00091 und in der Schwedischen Patentanmeldung Nr. 9402101-1, wobei diese HTCTMP-Variante in die erfindungsgemäß zur Herstellung eines erfindungsgemäßen mehrlagigen Produktes mit nichtnaßfester Innenlage zur Verbesserung der Wasserabsorption einbezogen ist.

Ein Effekt der chemischen Behandlung des Holzes vor der Zerfaserung ist der, daß die Fasern bei der Zerfaserung leichter freigelegt werden. Ein chemomechanischer oder in noch stärkerem Maße ein chermothermomechanischer Holzstoff (CTMP) enthält mehr "unzerbrochene" Fasern und weniger Splitter (fibre aggregates) als Holzschliff oder ein thermomechanischer Holzstoff. Die Eigenschaften eines chemomechanischen oder eines chemothermomechanischen Holzstoffes liegen näher an denen eines Zellstoffes (chemisch aufgeschlossenes Holz), trotzdem bestehen einige sehr wesentliche Unterschiede. So sind beispielsweise die Fasern eines chemomechanischen und die eines chemothermomechanischen Holzstoffes gröber (coarse) und enthalten einen hohen Ligninanteil sowie einen nicht unerheblichen Anteil an Harzen und Hemizellulosen im Vergleich mit Zellstoff. Das Lignin gibt den Fasern einen mehr hydrophoben Charakter und vermindert die Fähigkeit Wasserstoffbrückenbindungen zu bilden.

Anstelle von Holzschliff, thermomechanischem, chemomechanischem und chemothermomechanischem Holzstoff können auch auf chemischem Weg versteifte Zellstoff-Fasern verwendet werden. Hierunter sind Zellstoff-Fasern zu verstehen (das heißt Fasern aus rein chemischem Holzaufschluß), die chemisch so versteift worden sind, daß eine gegenüber nativem Zellstoff erhöhte Steifigkeit der Fasern sowohl im trockenen als auch im naßen Zustand resultiert. Dies beinhaltet die Zugabe von Chemikalien, die beispielsweise die Außenseite der Fasern durch einen Überzug (coating) beispielsweise gegen den Kontakt mit Wasser abdecken oder die in die Faser (Faserwand) eindringen. Weiterhin beinhaltet die chemische Versteifung eine Behandlung der Fasern, die darauf abzielt, die chemische Struktur der die Faserwand aufbauenden Cellulose zu verändern, beispielsweise durch Quervemetzungen zwischen den Cellulosekettenmolekülen. Eine solche Behandlung reduziert die Fähigkeit der Fasern (insbesondere die der Faseroberfläche) Wasserstoffbrückenbindungen auszubilden und verleiht den so behandelten Fasern in einem gewissen Umfang Eigenschaften, die denen von chemothermomechanischen Holzstoffen ähnlich sind insbesondere hinsichtlich einer elastischen Nachgiebigkeit im feuchten Zustand. Die chemisch versteiften Zellstoff-Fasern können zusätzlich eine sogenannte Verdrillung (curl value) aufweisen, das heißt sie können um ihre Längsachse verdreht (verdrillt) vorliegen.

Einige Beispiele für Chemikalien, die zur Versteifung von Zellstoff-Fasern geeignet sind, indem sie einen Überzug bilden oder die Zellstoff-Fasern durch Eindringen in die Faserwand imprägnieren, sind kationisch modifizierte Stärken, die Aminogruppen aufweisen, Latices, Naßfestmittel wie Polyamid-Epichlorhydrin-Harze, Urea-Formaldehyd-Harze, Melamin-Formaldehydharze und Polyethylenimin-Harze. Beispiele für Vernetzungschemikalien, die zur Vernetzung (innere Vernetzung) der Cellulose-Kettenmoleküle verwendet werden können, sind C2-C8 Monoaldehyde und C2-C8-Dialdehyde z.B. Formaldehyd oder Glutaraldehyd und Poly-Carboxyl-Säuren beispielsweise Zitronensäure.

Natürlich ist es auch möglich, Kombinationen von CTMP (oder anderen Holzstoffen) und chemisch versteiften Zellstoff-Fasern zu verwenden.

Wichtig ist jedoch, daß die versteiften Zellstoff-Fasern als fertiges Rohmaterial (das heißt, die Versteifung/Vorbehandlung wurde in einem vorgeschalteten Prozeß vorgenommen und dieser Prozeß ist abgeschlossen) im Sinne eines Faserrohstoffes für die Blattbildung bei der Rohtissueerzeugung zur Verfügung gestellt werden.

Faserstoffe können allerdings nicht nur pflanzlichen, sondern auch mineralischen oder synthetischen Ursprungs sein. Eine Übersicht zeigt Werner Franke in "Prüfung von Papier, Pappe, Zellstoff und Holzstoff", Band 2, Seite 15.

Aus dem Wochenblatt für Papierfabrikation 11/12 (1986), Seite 453 ist bekannt, daß Blätter aus CTMP gemäß Tabelle 5 eine hohe Wasseraufnahme von 10 - 12 g Wasser pro g Faserstoff haben im Gegensatz zu Blättern aus üblichem gebleichten Sulfat-Zellstoff mit nur 9 - 10 g Wasser pro g Faserstoff. Weiter wird dort ausgeführt, daß ein Zusatz von CTMP zu Zellstoff bei der Herstellung von Tissueprodukten eine Steigerung der Wasseraufnahme ergibt, wie sich aus Tabelle 4 ersehen läßt. Gleichzeitig bewirkt jedoch eine Zugabe von CTMP eine Verringerung mechanischer Eigenschaften, wie beispielsweise des Bruchwiderstandes, wie sich aus Tabelle 3 ersehen läßt. Auch der Weißgrad wird durch die Zugabe von CTMP gemindert, wie sich aus dieser Druckschrift auf Seite 456 in der rechten Spalte oben ergibt. Zur Vermeidung dieser durch CTMP hervorgerufenen negativen Eigenschaften im fertigen Tissueprodukt wird in der Publikation Appita, Band 41, Nr. 1, Seite 58 - 60 ein zweibahniges (zweilagiges) Produkt eingesetzt, wobei jede der beiden Lagen aus einer zweischichtigen Verbundbahn besteht, die außenseits aus Zellstoff und innenseits aus CTMP besteht, wie sich beispielsweise aus Figur 8 ergibt. Ein ähnliches Produkt ist auch in der Publikation Pulp & Paper, Canada, Band 89, Heft 11 (1988), T 381 - 383 beschrieben.

Die Veröffentlichung, die eine kombinierte Wirkung von feinen Fasern und gelösten organischen Stoffen auf Tissueeigenschaften beschreibt, veröffentlicht in Tappi Journal, April 1988, Seite 141, zeigt allgemein, daß die Tissuequalität durch Verunreinigungen beeinflußt werden kann, die im Sieb- oder Kreislaufwasser vorhanden sind. Insbesondere wird in dem Absatz zur Absorptionsrate, d. h. der Geschwindigkeit der Wasseraufnahme, ausgeführt, daß gelöste organische Stoffe bei Verunreinigungen bedeutender als CTMP-Feinstfasern für die Bestimmung der Absorptionsrate sind. In diesem Zusammenhang wurde gefunden, daß während der Herstellung eines Papierhandtuchs die Zugabe von Harzsäure und Lignin eine Verringerung der Absorptionsrate bewirken. Durch den Zusatz von Resinsäure, welches als Beleimungsmittel dient, wird ein vollständig nicht absorbierendes Tissueerzeugnis erhalten und der Zusatz von Lignin vermindert die normale Absorptionsfähigkeit auf 15 %. Der Zusatz von Xylan erhöht das Absorptionsvermögen um 15 %, obgleich eine Mischung von organischen Stoffen, die bis zu 70 % dieser Komponente enthält, den Effekt von Resinsäure und Lignin nicht überdeckt.

Die europäische Patentanmeldung 0 484 101 betrifft ein Papiertuch mit verbessertem Wasseraufnahmevermögen und einer verbesserten Absorptionsgeschwindigkeit auf Basis einer nicht laminierten, bahnförmigen Struktur enthaltend eine erste Schicht aus einem Gemisch chemischer Fasern und eine zweite Schicht eines Gemisches gekräuselter Weichholzfasern, also Nadelholzfasern mit hohem spezifischem Volumen, die im wesentlichen gleich geformt sind, wobei besagte erste Schicht aus einem Gemisch von chemischen Weichholz- und Hartholzfasern, also Laubholzfasern gebildet ist, wobei diese Mischung dichter ist als die zweite Schicht. Als Vergleich zu diesem Tissuepapiererzeugnis wird in Figur 4 b als Vergleich auch auf mehrschichtiges Papiertuch hingewiesen, welches neben zwei Innenlagen aus CTMP Außenlagen aus einer Mischung von 70 % Kraft-Weichholz und 30 % Kraft-Hartholz aufweisen. Nachdem in sämtlichen Vergleichsbeispielen, die in Tabelle 2 aufgelistet sind, nicht darauf hingewiesen wird, daß spezielle Naß- oder Trockenfestmittel zugesetzt werden, kann man davon ausgehen, daß keine der Lagen derartige Naß-Festmittel enthält. Aus der Tabelle ist auch nur zu entnehmen, daß durch die Substitution der Zellstoffinnnenschicht durch eine CTMP-Schicht sowohl die Dichte (der Kaliber), die trocken wie feucht gewonnene Bruchlänge, das Wasserhaltevermögen sowie die Wasserabsorptionszeit erhöht wird. Hier findet man keine Hinweise darauf, ob zusätzlich ein Naß-Festmittel bei den einzelnen Schichten zugefügt oder nicht zugeführt werden soll.

Die WO95/11343 betrifft ein mehrschichtiges Facial-Tissuepapierprodukt, welches neben Papierfasern als zwingende Bestandteile bis zu 3 % einer quaternären Ammoniumverbindung, bis 3 % einer wasserlöslichen Polyhydroxyverbindung, bis 3 % eines Naßfestmittels sowie bis 3 % eines Trockenfestmittels enthält. Nach einer bevorzugten Ausführungsform befindet sich sowohl der größte Teil des Naßfestmittels wie auch des Trockenfestmittels in wenigstens einer der mittleren Lagen. Hierdurch wird das erfindungsgemäß beanspruchte mehrlagige Tissueprodukt mit wenigstens einer CTMP-lnnenlage allerdings nicht nahegelegt, welches in dieser Innenlage kein Naßfestmittel aufweist.

Die WO95/00706 betrifft ein Soft-Tissueprodukt, enthaltend wenigstens eine Tissuelage mit einem spezifischen Volumen von 5 cm³/g oder mehr und einer maschinenlaufmaximalen Abweichung von 10 % oder weniger. Nach einer bevorzugten Ausführungsform enthält ein derartiges Papier in wenigstens einer seiner Lagen CTMP. Durch diesen Stand der Technik wird aber der Gegenstand, wie er nachfolgend beansprucht wird, weder vorbeschrieben noch nahegelegt.

Eigene Versuche bei der Produktion eines Tissueerzeugnisses, speziell eines Küchentuchs, mit einem Einsatz von geringen CTMP-Anteilen bis zu 35 % CTMP in Mischung mit Sulfitzellstoff zeigen jedoch noch keine signifikante Wasseraufnahme, wie später im Rahmen der Ausführungsbeispiele erläutert wird.

Bekanntermaßen ist eine hohe Wasseraufnahme u.a. bei Küchentüchern ein wichtiges Qualitätskriterium, wie sich beispielsweise aus dem Artikel im Wochenblatt für Papierfabrikation, Heft 11-12, 1988, Seiten 432 bis 434 ergibt.

Ebenso ist eine ausreichend hohe Naßfestigkeit unabdingbare Vorrausetzung für den bestimmungsgemäßen Gebrauch von insbesondere Küchen- und Handtüchern aber auch von Servietten und Taschentüchern, beispielsweise ist es unerwünscht, daß Teile der Tuch(produkt)außenflächen, wie etwa nicht ausreichend gebundene Fasern, insbesondere die an der Tuchoberfläche, in den Kontakt mit beispielsweise Lebensmitteln oder der Haut der Hände kommen, sich ablösen und dabei auf die Lebensmittel oder Hände übertragen werden und dort anhaften. Weiterhin muß eine genügende Reißfestigkeit, insbesondere Naßreißfestigkeit, sichergestellt sein um beispielsweise das Transportieren feuchter Lebensmittel, etwa von frisch gewaschenem Obst, in einem Küchentuch zu ermöglichen.

Bei eigenen Laborversuchen (siehe Proben 4 bis 9) zeigte sich überraschenderweise, daß bei Verwendung von Naßfestmitteln die Absorptionsfähigkeit zum Beispiel von HTCTMP in der Größenordnung herkömmlicher Zellstoffe lag, dem gegenüber bei Abwesenheit von Naßfestmitteln jedoch eine drastisch höhere Absorptionsfähigkeit des HTCTMP im Vergleich zu herkömmlichen Zellstoffen festzustellen war.

Der vorliegenden Erfindung liegt die Aufgabe zugrunde, ein mehrlagiges Tissueprodukt mit wenigstens einer CTMP-lnnenlage bereitzustellen, bei dem eine Verminderung der Absorptionsfähigkeit durch Naßfestmittel weitgehend vermieden wird, indem nur die Außenlagen naßfest ausgerüstet sind, wobei unter Absorptionsfähigkeit insbesondere das Speichervermögen für Wasser (water absorption capacity) zu verstehen ist. Auf diesem Wege bleibt eine fehlende Naßfestigkeit der Innenlage(n) ohne negative Folgen für den bestimmungsgemäßen Gebrauch.

Gegenstand der vorliegenden Erfindung ist daher, ein mehrlagiges bahnförmiges Tissueprodukt mit wenigstens drei miteinander wenigstens zum Teil verbundenen Lagen mit zwei gegebenenfalls geprägten überwiegend Zellstoff enthaltenden Außenlagen und wenigstens einer gegebenenfalls geprägten überwiegend CTMP-enthaltenden Innenlage, welches dadurch gekennzeichnet, daß nur die Außenlagen 0,1 bis 10 Gew.-%, vorzugsweise 0,1 bis 8 Gew.-% wenigstens eines Naßfestmittels, bezogen auf die Fasermasse der Außenlage, enthalten, während die überwiegend CTMP-enthaltende(n) Innenlage(n) kein Naßfestmittel enthält (enthalten).

Zu den erfindungsgemäßen Produkten mit verbessertem Wasseraufnahmevermögen gehören typischerweise Tissue-Rollenprodukte mit mehrlagigem bahnförmigem Zuschnitt, deren Bahnlänge in Abschnitten durch Perforierschnitt unterteilt ist, wie beispielsweise Toilettenpapiere, Küchentücher oder Handtücher, insbesondere jedoch 3-lagige Küchentücher.

Nach einer bevorzugten Ausführungsform der vorliegenden Erfindung enthalten die Außenlagen 51 bis 100 Gew.-%, bevorzugt 90 bis 100 Gew.-%, Zellstoff und 0 bis 49 Gew.-%, bevorzugt 0 bis 10 Gew.-%, Synthesefasern oder chemisch modifizierten Naturfasern.

Nach einer weiteren bevorzugten Ausführungsform enthalten die Innenlagen 50 bis 100 Gew.-%, bevorzugt 65 bis 90 Gew.-%, HTCTMP/CTMP sowie 0 bis 50 Gew.-%, bevorzugt 10 bis 45 Gew.-%, Zellstoff sowie übliche Hilfs- und Zusatzstoffe als Rest. Idealerweise enthalten die Innenlagen 65 bis 80 Gew.-%, bevorzugt 70 bis 75 Gew.-%, HTCTMP/CTMP sowie 20 bis 35 Gew.-%, bevorzugt 25 bis 30 Gew.-% Zellstoff sowie übliche Hilfs- und Zusatzstoffe.

Nach einer weiteren bevorzugten Ausführungsform handelt es sich bei den vorstehend eingesetzten HTCTMP/CTMP-Rohstoffen entweder um eine reine Laubholz- oder Nadelholzqualität, eine HTCTMP/CTMP-Synthesefaser-Mischung oder bevorzugterweise auch um eine Mischung von HTCTMPICTMP aus Nadel- und/oder Laubholz mit herkömmlichen Zellstoffen aus Nadel- und/oder Laubholz, gegebenenfalls mit einem Anteil aus modifizierten Naturfasern.

Für die vorgenannten Außenlagen setzt man vorzugsweise eine Rohtissuequalität bestehend aus nach dem Sulfit-Verfahren gewonnenen Nadelholz-Zellstoffqualitäten, beispielsweise Fichten-, Tannen- und Lärchenholz bzw. Laubholz-Zellstoffqualitäten wie beispielsweise Buchensulfit, Birken- oder Pappelsulfit ein. Altemativ kann man auch eine Rohtissuequalität aus nach dem Sulfatverfahren gewonnenen Nadel- und/oder Laubholz-Zellstoffqualitäten einsetzen. Schließlich können auch Synthesefasern wie beispielsweise Polypropylenfasern (z. B. Chisso-Polypro, vertrieben von der Chisso Fibre S.A., Belgien), HD-Polyethylenfasern, Polyesterfasern, insbesondere auf Basis von aromatischen Polyestern wie Polyethylenterephthalat (Dacron® der Du Pont) sowie Polyvinylalkohol, wobei die vorgenannten Polypropylenfasern und Polyethylenterephthalatpolyesterfasern bevorzugt eingesetzt werden. Auch Mischungen der vorgenannten Tissuequalitäten können eingesetzt werden.

Bei den erfindungsgemäßen mehrlagigen, bahnförmigen Tissueprodukten werden ausschließlich die Außenlagen, nicht allerdings die Innenlagen, mit einem Naßfestmittel versetzt.

Ein derartiges Naßfestmittel oder Naßverfestigungsmittel ist beispielsweise ein Polyamid-Epichlorhydrinharz oder ein Polyamidoamin-Epichlorhydrinharz in wäßriger Lösung, wie es beispielsweise unter dem Handelsnamen GILUTON N 1100128 der Guilini Chemie, Ludwigshafen, vertrieben wird. Naßfestmittel dieses Typs werden bei der Tissueerzeugung im Neutral-pH-Bereich eingesetzt. Weitere Naßfestmittel sind für eine Produktion unter sauren Bedingungen Melamin/Formaldehyd oder Harnstoff/Formaldehyd-Kondensationsprodukte in anionischer und kationischer Modifizierung. Es können auch Produkte mit gekoppelter naß- und trockenverfestigender Wirkung zum Einsatz gelangen, beispielsweise eine wäßrige Lösung eines kationischen Polyacrylamids, wie beispielsweise Parez® 631 NC der Cytec Industries.

Bei einer Produktion vorzugsweise bei neutralem bis schwach alkalischem pH-Wert sind dies Polyamidoamin-Epichlorhydrin-Harze, beispielsweise Umsetzungsprodukte von Adipinsäure mit Diethylentriamin oder ähnlichen Aminen und Epichlorhydrinen. Derartigen Naßfestmitteln ist gemeinsam, daß sie im Papier bei Trocknung und Lagerung noch chemisch unter Vemetzung weiter reagieren. Als wasserunlösliche Harze schützen sie die an den Kreuzungspunkten der Papierfasern ausgebildeten Wasserstoff-Brückenbindungen wenigstens teilweise vor dem festigkeitszersetzenden Zugriff von Wasser.

Schließlich sind als Naßfestmittel noch Polyalkylenpolyamine, beispielsweise Polyethylenimin, zu nennen, die im neutralen Bereich merkliche Naßeffekte zeigen, ohne jedoch noch chemisch reaktiv zu sein, welches in Mengen von 0,1 bis 10 Gew.-%, bevorzugt 2,5 bis 5 Gew.-% und insbesondere 3 bis 4 Gew.-%, bezogen auf das Rohtissue eingesetzt wird.

Neben diesem Naßfestmittel werden als übliche Hilfs- und Zusatzstoffe auch Trockenverfestiger eingesetzt, d.h. synthetische Produkte zur Verbesserung der mechanischen Festigkeit im trockenen Zustand, wie beispielsweise Stärke und ihre Derivate, beispielsweise eine biionische Stärke Hi Cat 1022 der Roquette GmbH; Frankfurt, sowie Komplexbilder zur Beseitigung störender unlöslicher Erdalkali und Schwermetallverbindungen, beispielsweise Natriumpolyphosphate oder Natriumsalze der Nitrilotriessigsäure, der Ethylendiamintetraessigsäure und der Diethylentriaminpentaessigsäure und Entschäumer, also Mittel zur Vermeidung und Zerstörung von Oberflächenschaum bei der Papierherstellung und zur Entfernung störender, die Entwässerung auf dem Sieb und die Vergleichmäßigung des Papierblatts beeinträchtigender Lufteinschlüsse innerhalb der Papierstoffsuspension. Bei den Entschäumern handelt es sich üblicherweise um Blockcopolymere aus Ethylenoxid und Propylenoxid sowie Alkylenoxidadukte an Fettsäuren und Fettalkohole. Schließlich können als übliche Hilfs- und Zusatzstoffe auch noch Haft- und Antihaftmittel zur Steuerung des Coatings am Yankee-Zylinder eingesetzt werden. Zu den Hilfs- und Zusatzstoffen, die bei der erfindungsgemäßen Erzeugung von erfindungsgemäßen Tissueprodukten eingesetzt werden können, sind auch Papierfarbstoffe zur Pastell- oder Intensivtönung der einlagigen Rohtissuepapiere zu zählen.

Nach einer weiteren bevorzugten Ausführungsform des erfindungsgemäßen mehrlagigen, bahnförmigen Tissueproduktes können die Einzellagen abweichend vom üblicherweise gleichen Flächengewicht unterschiedliches Flächengewicht dergestalt aufweisen, daß die beiden äußeren, überwiegend aus Zellstoff bestehenden Lagen ein Flächengewicht im Bereich von 12 bis 30 g/m², vorzugsweise 15 bis 20 g/m², insbesondere 16 bis 18 g/m² und die Innenlage(n), die überwiegend aus CTMP oder HTCTMP bestehen, ein Flächengewicht im Bereich von 16 bis 40 g/m², vorzugsweise 18 bis 30 g/m², insbesondere 20 bis 25 g/m², besitzen.

Nach einer weiteren bevorzugten Ausführungsform betrifft die vorliegende Erfindung ein Verfahren zur Herstellung eines mehrlagigen, bahnförmigen Tissueproduktes mit benenfalls geprägten überwiegend Zellstoff enthaltenden Außenlagen und wenigstens einer gegebenenfalls geprägten überwiegend CTMP-enthaltenden Innenlage, welches gemäß folgenden Verfahrensschritten hergestellt wird:
- Bereitstellung von zwei wenigstens ein Naßfestmittel enthaltenden Außenlagen sowie von wenigstens einer naßfestmittelfreien CTMP- oder in der Wirkung vergleichbaren Faserrohstoff-haltigen Innenlage
- Zusammenführung der CTMP- oder in der Wirkung vergleichbaren Faserrohstoff-haltigen Innenlagen mit den Außenlagen unter Verwendung von Reguliereinrichtungen, wie beispielsweise Zugregelungen, Bahnführungen und Breitstreckeinrichtungen,
- gegebenenfalls Glättung
- gegebenenfalls Prägung, gegebenenfalls für jede Einzellage des endfertigen Tissueproduktes einzeln
- Lagenverhaftung, gegebenenfalls über mechanische Einwirkung, wie beispielsweise Rändelung, Breiträndelung oder Spot-Embossing, gegebenenfalls in Verbindung mit Verleimung oder ausschließlich über Verleimung
- gegebenenfalls Bedruckung
- Konfektionierung

Die Herstellung der Außen- und Innenlagen für das erfindungsgemäße mehrlagige, bahnförmige Tissueprodukt kann auf einer Papiermaschine für Tissuepapiere geschehen. Dies erfolgt gemäß Stand der Technik in der Weise durch einen ein- oder mehrschichtigen Stoffauflauf oder Sonderformen desselben wie Saugbrusfformer bei Langsiebmaschinen, einer aus mindestens einem Sieb bestehenden Entwässerungspartie (beispielsweise einem Langsieb, einem Langsiebformer, einem Crescent-Former), gegebenenfalls einer Filzpartie oder einer anderen zum Transport eines teilentwässerten Vlieses geeigneten bahnförmigen Konstruktion, beispielsweise eines umlaufenden Kunststoff- oder Verbundstoffbandes sowie eines Yankee-Zylinders zum Trocknen der Bahn nebst Kreppeinrichtung. Die Aufrollung der getrockneten, gegebenenfalls gekreppten, Bahn erfolgt auf einem Tragtrommel (Pope)-Roller. Diesem Trocknungsteil kann eine Einrichtung zur Durchströmtrocknung vorgeschaltet sein. Eine Glättung, gegebenenfalls eine Doublierung mit integrierter Glättung können folgen.

Im Falle der Herstellung von naßfesten Außenlagen für das erfindungsgemäße mehrlagige, bahnförmige Tissueprodukt wählt man günstigerweise eine konventionelle Tissuemaschine (Doppelsieb- oder Crescent-Former), Einfilz-Pressenpartie sowie Yankee-Zylinder und abschließendem Kreppschaber. Die Bahnüberführung erfolgt von Sieb zu Filz durch eine Pick-Up-Walze sowie vom Filz an den Yankee-Zylinder durch mindestens eine Preßwalze mit Saugeinrichtung und/oder blindgebohrt sowie eine Kombination bei mehr als einer Walze. Die Aufrollung der gekreppten Bahnen geschieht mittels eines Pope-Rollers. Es kann sich eine Doubliermaschine zur Erzeugung von mehrlagigen Zwischenprodukten für die Verarbeitung anschließen.

Für die Fertigung der naßfesten Außenlagen werden die erforderlichen Chemikalien, wie beispielsweise Naßfestmittel, Farbstoffe, Trockenverfestiger, Polyphosphate oder Entschäumer im Schnellmischer oder in den Bütten oder an anderen Stellen üblicherweise im Dickstoffbereich des Konstanzteils der Tissuemaschine zugesetzt. Bevorzugter Zugabeort der Chemikalien für Naßfestausrüstungen ist die Maschinenbütte. Andere Zugabeorte wie Niveaukasten und vor der Stoffpumpe sind ebenfalls möglich.

Zur Fertigung der Innenlage aus CTMP für das erfindungsgemäße mehrlagige, bahnförmige Tissueprodukt wird erfindungsgemäß auf den Einsatz von Naßfestmitteln verzichtet. Auch jeder übrige Zusatz von ähnlich wirkenden Chemikalien wird auf ein Mindestmaß reduziert.

In einer weiteren bevorzugten Ausführungsform eines Verfahrens zur Herstellung eines erfindungsgemäßen, mehrlagigen Tissueproduktes mit einer nicht naßfesten Mittellage mit erhöhter Absorptionskapazität wird ein einlagiges Rohtissue zur Erzeugung dieser Mittellage für den Verarbeitungsprozeß bereitgestellt, das von seiner stofflichen Zusammensetzung her überwiegend aus chemothermomechanischem Holzstoff (CTMP) besteht oder gegebenenfalls aus Holzschliff (MP/GW) oder gegebenenfalls aus thermomechanischem Holzstoff (TMP) oder gegebenenfalls aus chemomechanischem Holzstoff (CMP) oder gegebenenfalls aus Mischungen daraus und/oder gegebenenfalls aus Zellstoff-Fasern, die in ähnlicher Weise wie CTMP die Absorptionsfähigkeit eines Faserverbundes zu steigen vermögen, indem sie in solcher Art und Weise chemisch versteift oder innerhalb der Faserwand quervemetzt werden, daß die Fähigkeit dieser Fasern zur Ausbildung von Wasserstoffbrückenverbindungen im feuchten Zustand signifikant reduziert ist, wobei diese Fasern verdrillt (curl), gebogen, verwunden oder gekräuselt sein können, um eine möglichst offene räumliche Struktur des Faserverbundes zu liefern, wobei der Anteil an CTMP und/oder die in ähnlicher Weise die Absorptionskapazität des Faserbundes verbessernden alternativen Fasern 50 % übersteigt, bevorzugt 55 bis 90 %, insbesondere bevorzugt 60 bis 75 % beträgt, während der Rest aus konventionellem Zellstoff oder Zellstoffmischungen besteht.

Eine andere bevorzugte Ausführungsform eines Verfahrens zur Herstellung eines erfindungsgemäßen, mehrlagigen Tissueproduktes mit einer (mehreren) nichtnaßfesten Mittellage(n) mit erhöhter Absorptionsfähigkeit einer der zuvor beschriebenen Zusammensetzungen sieht vor, das bereitzustellende einlagige Rohtissue in der Weise herzustellen, daß aus den zuvor beschriebenen geeigneten Faserrohstoffen wie beispielsweise HTCTMP/CTMP in konventioneller Weise ein einlagiges, gegebenenfalls mehrschichtiges endloses Blatt (Faservlies) gebildet wird, beispielsweise durch Entwässern der Faserstoffsuspension auf einem oder zwischen zwei umlaufenden Sieben, daß anschließend an die Blattbildung eine Vortrocknung erfolgt, indem das noch feuchte Faservlies bei einem Trockengehalt zwischen 10 und 35 %, gegebenenfalls unter Einwirkung von Scherkräften, beispielsweise durch Anwendung einer Geschwindigkeitsdifferenz an einer dafür ausgebildeten Übergabestelle, gegebenenfalls unter zusätzlicher Anwendung von Unter-/Überdruck, an ein zur Strukturierung, Transport und weiteren Entwässerung/Durchlüftung geeignetes Sieb, Fabric, Filz, Siebfilz oder sonstiges, für Luft und Wasser durchlässiges jedoch die Feststoffe wie die Fasern des Faservlieses zurückhaltendes Transportband übergeben wird, das das Faservlies einem Durchströmtrockner (TAD = Through air drying) zur Vortrocknung zuführt. Im Anschluß an die Durchströmtrocknung wird die so vorgetrocknete "Papierbahn" bei einem Trockengehalt zwischen 65 bis 92 % mit Hilfe einer Preßwalze, die gegebenenfalls eine strukturierte Oberfläche aufweisen kann, die gegebenenfalls einen durchbrochenen Mantel hat, in deren Innerem weiterhin gegebenenfalls eine Unterdruckeinrichtung (Kammersystem) installiert ist, an einen Yankee-Zylinder übergeben, der in Verbindung mit einer Heißlufthaube(n) die Nachtrocknung übernimmt und gegebenenfalls eine Kreppung der Tissuebahn ermöglicht, die dann auf konventionelle Weise mit Hilfe geeigneter, gegebenenfalls strukturierter Kreppschaber unter Anwendung von Krepphilfsmitteln zur Steuerung der Adhäsion in einem Trockengehaltsbereich zwischen 92 und 98 %, bevorzugt zwischen 93 bis 97 %, insbesondere bevorzugt zwischen 94 bis 96 %, erfolgt. Die gekreppte Tissuebahn wird gegebenenfalls inline geglättet, indem die Tissuebahn vor der Aufrollung durch ein Glättwerk geführt wird, wobei die Tissuebahn dem Preßdruck zweier Walzen mit glatter Oberfläche ausgesetzt wird, die einen Nip bilden, zwischen dem die Tissuebahn hindurchgeführt wird, wobei eine der Walzen eine Stahloberfläche besitzt und die als Gegenwalze dienende zweite Walze eine Oberfläche ebenfalls aus Stahl oder gegebenenfalls aus Kunststoff aufweist, wobei gegebenenfalls wenigstens eine dieser Glättwalzen beheizt oder gekühlt werden kann. Die gegebenenfalls gekreppte, gegebenenfalls geglättete Tissuebahn wird anschließend beispielsweise auf einem Tragetrommelroller aufgerollt und steht dann als einlagiges Rohtissue als maschinenbreiter Tambour oder verarbeitungsmaschinenbreit als Mutterrolle für die weitere erfindungsgemäße Verarbeitung als besonders saugfähige Innenlage des herzustellenden erfindungsgemäßen Tissueproduktes bereit.

Der Rohtissueerzeugung kann eine Doublierung, gegebenenfalls mit integrierter Glättung, wie bereits beschrieben, folgen, so daß auch mehrlagig doublierte Mutterrollen, gegebenenfalls auch unterschiedlicher Tissuequalitäten in den einzelnen doublierten Lagen, für die weitere Verarbeitung zu erfindungsgemäßen endfertigen Produkten bereitgestellt werden können.

Wie in der Literatur referiert, führen organische Verunreinigungen, kolloidal gelöste Stoffe und/oder Feinstoffe zur Abnahme der initialen Absorptionsfähigkeit von CTMP, was einem erfindungsgemäßen Verfahren entgegenstehen würde.

Maschinentechnisch findet dieser Umstand beispielsweise bei einem Verfahren zur Erzeugung erfindungsgemäßer mehrlagiger, bahnförmiger Tissueprodukte mit einer nicht naßfesten Mittellage (nicht naßfesten Mittellagen) dadurch Beachtung, daß zur Herstellung einer hochsaugfähigen Tissuebahn beispielsweise aus CTMP neben dem Verzicht auf Naßfestmittel auch die Ausschleusung von Feinstoffen und gelöster Organik beachtet wird. Hierzu werden gegebenenfalls geeignete Trennverfahren eingesetzt sowie beispielsweise Maßnahmen wie die Ausbringung der abfiltrierten Feinstoffe am Scheibenfilter aus dem Maschinenkreislauf, die Floatation eines mehr oder weniger großen Teils des Siebwassers sowie der erhöhte Einsatz von Frischwasser herangezogen. Weiterhin wird durch Auswahl von möglichst feinstoffarmen Rohstoffen (beispielsweise eines entsprechenden Langfaser-CTMP und Kiefersulfat-Zellstoff) sowie die Vermeidung von Mahlung der Anfall der störenden Substanzen reduziert.

Nach dem erfindungsgemäßen Verfahren zur Erzeugung erfindungsgemäßer mehrlagiger, bahnförmiger Tissueprodukte mit einer nicht naßfesten Mittellage (nicht naßfesten Mittellagen) wird in Analogie zum Stand der Technik der Verarbeitung einzelner oder zuvor mehrfach doublierter, maschinengekreppter Tissuebahnen die Verarbeitung in der Weise erfolgen, daß man die bereitzustellende Rohwatte (Rohtissue/Rohtissuepapier) in mindestens eine Abrollung der Verarbeitungsmaschine/-linie (z. B. eines Küchentuchumrollers) einhängt. Die das Verfahren repräsentierende Verarbeitungsmaschine besteht dabei aus mindestens einer Abrollung, gegebenenfalls einem Druckwerk, gegebenenfalls einem Mehrfarbendruckwerk, einer Lagenprägestation mit wenigstens einem Prägewerk bestehend aus einem Walzenpaar, das einen Prägenip bildet, durch den die Tissuebahn geführt wird, wobei eine der Walzen maskuline Noppen trägt, die nach einer zufälligen Verteilung oder regelmäßig, gegebenenfalls unter Bildung eines Musters, vollflächig oder gegebenenfalls wenigstens über einen Teil der Oberfläche dieser Stahlwalze verteilt sind und die Gegenwalze eine Oberfläche aus Gummi, Kunststoff, Papier oder Stahl besitzt, wobei die Stahloberfläche der Gegenwalze glatt ist oder gegebenenfalls feminine Vertiefungen aufweist, die zu den maskulinen Noppen der ersten Prägewalze registerhaltig ausgeführt sind und gegebenenfalls einen einstellbaren, geringen Spalt bilden. Den Lagenprägewerken ist bei diesem bevorzugten Verfahren wenigstens eine Beleimungsstation, bevorzugt jedem Prägewerk eine eigene Beleimungsstation zur Erzeugung von Lagenhaftung zwischen den Einzellagen des Tissueproduktes zugeordnet. In einer alternativen Ausführungsform des erfindungsgemäßen Verfahrens wird die Lagenhaftung über mechanische Behandlung erzeugt, indem die zuvor mit einer ersten Lagenprägung versehenen Einzellagen nachfolgend gemeinsam in einer Verbindungsprägestation (Rändel-, gegebenenfalls Breiträndelstation) mit einer über einen begrenzten Teil der Tissueoberfläche, meist parallele Streifen vorgebbarer Breite, bevorzugt 5 bis 40 mm je Streifen, reichenden Verbindungsprägung (Rändelung, gegebenenfalls Breiträndelung) versehen werden, wobei diese Verbindungsprägung gegebenenfalls durch eine zusätzliche Verleimung unterstützt wird. Das erfindungsgemäße Verfahren sieht weiter die Wicklung der Tissueproduktbahn zu Stämmen vor, die Unterteilung der Bahnlänge in Abschnitte gleicher Länge durch Perforierquerschnitt, die Zuführung von Hülsen zur Wikkelstation, gegebenenfalls die Befestigung eines Anfangsblattes auf der Hülsenoberfläche, das Abschlagen der Tissueproduktbahn nach dem Aufwickeln einer vorgebbaren Anzahl von Abschnitten (Einzelblätter des fertigen Tissueproduktes), eine Endblattverleimung, das Ausstoßen und den Weitertransport des gewickelten Stammes, die Speicherung von Stämmen in einem Stämmespeicher, die Teilung des Stammes in Schmalrollen von Endproduktbreite durch einen Trennschnitt mit Hilfe einer Säge oder eines Trennmessers sowie die marktgerechte Verpackung und Stapelung des endfertigen Tissueproduktes.

Zur Verarbeitung werden die Rohwatten (bereitgestellte Mutterrollen) in der Weise eingehängt, daß die unterschiedlich naßfest ausgerüsteten Lagen mindestens eine, in der erforderlichen Lagenzahl entweder vordoublierte Einzellage oder einfache Tissuebahn ist, wobei die nicht naßfeste, überwiegend beispielsweise aus CTMP (HTCTMP) bestehende(n) Innenlage(n) zwischen wenigstens zwei überwiegend aus Zellstoff bestehende(n), naßfest ausgerüstete(n) Außenlage(n) zu liegen kommt.

In einer weiteren Ausführungsform des erfindungsgemäßen Verfahrens sind für jede einzelne Bahn separate Abrollungen, beispielsweise für ein dreilagiges Produkt drei Abrollungen oder Mixvarianten zwei Abrollungen mit einmal undoubliert und/oder zweimal gegebenenfalls zweifach doublierter Rohwatte möglich. Es können sich verfahrenstypische und dem Stand der Technik entsprechende Verarbeitungsschritte wie Glättung oder wie zuvor beschriebene Lagenprägung sowie Maßnahmen zur Erzeugung der Lagenverhaftung wie Verbindungsprägung, Verleimung undloder Rändelung anschließen. Üblicherweise folgt dann die Konfektionierung der verhafteten Rohwattebahnen auf Endproduktgröße im Sinne des Formatschneidens oder Perforierens sowie Aufrollung und Falzung zum Endprodukt sowie dessen geeignete marktübliche Verpakkung.

Unter Tissueprodukt im Sinne der vorliegenden Erfindung versteht man bevorzugt Küchentücher, Handtücher, Toilettenpapier, insbesondere aber ein entsprechendes, wenigstens dreilagiges Küchentuch aber auch Kosmetiktücher, Abschminktücher, Servietten und gegebenenfalls Taschentücher.

Die vorliegende Erfindung wird nachfolgend durch Ausführungsbeispiele näher erläutert. Hierbei wird die Absorption (relative Wasseraufnahme/water absorption capacity) stets in g Wasser pro g Faserstoff verstanden. Bei Gemischen aus Zellstoff und CTMP beziehen sich die eingesetzten Prozentzahlen jeweils auf Gew.-% der Gesamtfaserstoffmasse.

Der Einfluß des Weglassens eines Naßfestmittels auf die relative Wasserabsorptionskapazität, bestimmt nach DIN 54540, Teil 4, bei einem überwiegend High-Temperature CTMP enthaltenden einlagigem Rohtissue, mit einem Flächengewicht im Bereich von etwa 22 bis 30 g/qm, welches maschinengekreppt ist, läßt sich anhand folgender Proben zeigen:

Ein übliches Rohtissue hergestellt auf einer konventionellen Yankee Zylinder Maschine aus 30 % Kiefersulfat und 70 % High-Temperature-CTMP (HTCTMP), dem ein Naß-festmittel auf Basis eines Polyamidoamin-Epichlorhydrinharzes (Giliton N 1100/28, Giulini Chemie, Ludwigshafen) in einer Menge von 3 % zugefügt worden ist, zeigt eine relative Wasserabsorptionskapazität (relative Wasseraufnahme) von 5 g Wasser pro g Faserstoff (Probe 1).

Ein entsprechendes Rohtissue, allerdings ohne Zugabe eines Naßfestmittels, zeigt demgegenüber eine relative Wasserabsorptionskapazität (relative Wasseraufnahme) von 6,0 g Wasser pro g Faserstoff (Probe 2).

Stellt man ein derartiges Rohtissue aus 10 % Kiefersulfat und 90 % HTCTMP her, so erhält man sogar eine relative Wasserabsorptionskapazität (relative Wasseraufnahme) von 7,8 g Wasser pro g Faserstoff (Probe 3).

Hieraus folgt, daß schon das Weglassen der üblichen Naßfestausrüstung, also der Naßfestmittelzugabe, die Wasseraufnahme signifikant verbessert. Zusätzlich kann durch die Erhöhung des CTMP-Anteils von 70 auf 90 % nochmals eine Absorptionssteigerung um fast 2 g pro g erhalten werden.

Als weiteres Beispiel zeigt ein übliches klimatisiertes CTMP-Laborblatt mit einem Flächengewicht von etwa 80 g/m² ohne Zusatz von Naßfestmittel eine relative Wasserabsorptionskapazität (relative Wasseraufnahme) von 7,8 g/g Faserstoff (Probe 4).

Ein üblicher Fichtensulfit-Zellstoff (klimatisiertes Laborblatt) mit einem Flächengewicht von etwa 80 g/m² ohne NFM-Zusatz zeigt eine relative Wasserabsorptionskapazität (relative Wasseraufnahme) von nur 2,5 g/g Faserstoff (Probe 5).

Ein Laborblatt, bestehend aus einer Mischung von 50 % CTMP gemäß Probe 4 sowie 50 Gew.-% Fichtensulfit-Zellstoff mit einem Flächengewicht von etwa 80 g/m² zeigt bereits eine relative Wasserabsorptionskapazität (relative Wasseraufnahme) von 4,5 g Wasser pro g Faserstoff (Probe 6).

Ein entsprechendes Rohtissue auf CTMP-Basis gemäß Probe 4, dem das Naßfestmittel gemäß Probe 1 in einer Menge von 5 % zugefügt worden ist, zeigt eine Absorption von 2,3 g Wasser pro g Zellstoff (Probe 7).

Ein Tissuepapier gemäß Probe 5 wird in der Weise modifiziert, daß diesem 5 % des Naßfestmittels gemäß Probe 1 zugefügt wird. Das so erhaltene Blatt zeigt dann noch eine relative Wasserabsorptionskapazität (relative Wasseraufnahme) von nur 1,9 g Wasser pro g Faserstoff (Probe 8).

Das Laborblatt gemäß Probe 6 wird in der Weise modifiziert, daß dort zusätzlich 5 %, bezogen auf den Stoff, des Naßfestmittels gemäß Probe 1 zugefügt worden sind. Man erhält so eine relative Wasserabsorptionskapazität (relative Wasseraufnahme) von wiederum 2,3 g pro g Faserstoff (Probe 9).

### Anwendungsbeispiel:

Ein dreilagiges Küchentuch konventioneller Herstellung mit maschinengekreppten Außenlagen mit einem Flächengewicht von etwa 22 g/m² je Lage wird aus dem entsprechenden Rohtissue aus 60 % Fichtensulfit und 40 % Buchensulfit, welches durch die Zugabe von 3 Gew.-% des Naßfestmittels gemäß Probe 1 behandelt worden ist, hergestellt. Weiterhin wurde das vorstehend mit Nr. 2 bezeichnete Rohtissue aus Kiefersulfat/HTCTMP erstellt und für die Mittellage verwendet. Das hieraus erzeugte dreilagiges Küchentuch weist eine relative Wasserabsorptionskapazität (relative Wasseraufnahme) von 5,2 g pro g Faserstoff auf.

### Vergleichsbeispiel 1:

Ein dreilagiges Küchentuch wurde aus den Außenlagen der vorgenannten Art gemäß Anwendungsbeispiel sowie einer Mittellage, die in ihrer Zusammensetzung mit der Außenlage übereinstimmt, hergestellt. Ein derartiges Küchentuch weist eine relative Wasserabsorptionskapazität (relative Wasseraufnahme) von nur 4,6 g Wasser pro g Faserstoff auf.

### Vergleichsbeispiel 2:

Die Schichtenfolge des dreilagigen Küchentuchs gemäß Anwendungsbeispiel wurde in der Art modifiziert, daß anstelle einer Mittellage ohne Naßfestmittel ein Rohtissue eingesetzt worden ist, wie es unter Nr. 1 vorstehend beschrieben worden ist. Man erhielt bei diesem Küchentuch eine relative Wasserabsorptionskapazität (relative Wasseraufnahme) von 5,0 g Wasser pro g Faserstoff.

Aus der vorstehenden Gegenüberstellung des Küchentuchs gemäß Anwendungsbeispiel mit dem Küchentuch gemäß Vergleichsbeispiel ergibt sich deutlich der vorteilhafte Einfluß des Weglassens des Naßfestmittels in der CTMP-Mittellage.

## Patentansprüche

1. Mehrlagiges bahnförmiges Tissueprodukt mit wenigstens drei miteinander wenigstens zum Teil verbundenen Lagen mit zwei gegebenenfalls geprägten überwiegend Zellstoff enthaltenden Außenlagen und wenigstens einer gegebenenfalls geprägten überwiegend Naturfasern, die insbesondere aus Holz stammen, die zur Gruppe der Holzstoffe gezählt werden wie Holzschliff, thermomechanischer Holzstoff, chemomechanischer Holzstoff oder chemothermomechanischer Holzstoff (CTMP) und/oder Zellstofffasern, die in der Art und Weise chemisch versteift oder innerhalb der Faserwand quervernetzt wurden, daß die Fähigkeit dieser Fasern zur Ausbildung von Wasserstoffbrückenbindungen im feutchten Zustand signifikant reduziert ist, enthaltenden Innenlage, **dadurch gekennzeichnet,** daß nur die Außenlagen bis zu 8 Gew.-% eines Naßfestmittels, bezogen auf das Rohtissue, enthalten.

2. Tissueprodukt nach Anspruch 1, **dadurch gekennzeichnet,** daß die Außenlagen 51 bis 100 Gew.-% Zellstoff und 0 bis 49 Gew.-% Synthesefasern oder chemisch modifizierte Fasern enthalten.

3. Tissueprodukt nach Anspruch 1, **dadurch gekennzeichnet,** daß die Innenlage(n) 60 bis 100 Gew.-% eines Holzstoffes, insbesondere CTMP und/oder Zellstoff-Fasern, die in der Art und Weise chemisch versteift oder innerhalb der Faserwand quervernetzt wurden, daß die Fähigkeit dieser Fasern zur Ausbildung von Wasserstoffbrückenbindungen im feuchten Zustand signifikant reduziert ist, sowie 0 bis 40 Gew.-% Zellstoff enthält.

4. Tissueprodukt nach Ansprüchen 1 bis 3, **dadurch gekennzeichnet,** daß der Zellstoff ausgewählt ist aus Laubholz- oder Nadelholzzellstoff oder aus Synthesefasern, chemisch modifizierten Naturfasern oder aus einem Gemisch dieser Zellstoffsorten.

5. Tissueprodukt nach vorstehenden Ansprüchen, **dadurch gekennzeichnet,** daß das Naßfestmittel ausgewählt ist aus Melamin/Formaldehyd- oder Harnstoff-Formaldehyd-Kondensationsprodukten in anionischer und kationischer Modifizierung, Polyamidoamin-Epichlorhydrinharze oder Polyalkylen-Polyamine.

6. Tissueprodukt nach vorstehenden Ansprüchen, **dadurch gekennzeichnet,** daß das Flächengewicht der Außenlagen 12 bis 30 g/m², vorzugsweise 15 bis 20 g/m² beträgt.

7. Tissueprodukt nach vorstehenden Ansprüchen, **dadurch gekennzeichnet,** daß das Flächengewicht der Innenlagen 16 bis 40 g/m², vorzugsweise 18 bis 30 g/m² beträgt.

8. Tissueprodukt nach vorstehenden Ansprüchen, **dadurch gekennzeichnet,** daß es sich um ein Taschentuch, ein Kosmetiktuch, ein Toilettenpapier oder ein Küchentuch, insbesondere um ein Küchentuch, handelt.

9. Verfahren zur Herstellung eins mehrlagigen bahnförmigen Tissueprodukts nach den Ansprüchen 1-8 mit wenigstens drei miteinander wenigstens zum Teil verbundenen Lagen, mit zwei gegebenenfalls geprägten überwiegend Zellstoff enthaltenden Außenlagen und wenigstens einer gegebenenfalls geprägten überwiegend CTMP oder sonstige Holzstoffe und/oder Zellstoff-Fasern, die in der Art und Weise chemisch versteift oder innerhalb der Faserwand quervernetzt wurden, daß die Fähigkeit dieser Fasern zur Ausbildung von Wasserstoffbrückenverbindungen im feuchten Zustand signifikant reduziert ist, enthaltenden Innenlagen, erhalten durch folgende Schrittfolge:
- Bereitstellung von zwei wenigstens ein Naßfestmittel enthaltenden Außenlagen sowie von wenigstens einer naßfestmittelfeien HTCTMP/CTMP-haltigen Innenlage, wobei sonstige Holzstoffe und/oder Zellstoff-Fasern, die in der Art und Weise chemisch versteift oder innerhalb der Faserwand quervernetzt wurden, daß die Fähigkeit dieser Fasern zur Ausbildung von Wasserstoffbrückenbindungen im feuchten Zustand signifikant reduziert ist ebenfalls zum Einsatz kommen können
- Zusammenführung der HTCTMP/CTMP-haltigen Innenlage(n), wobei sonstige Holzstoffe und/oder Zellstoff-Fasern, die in der Art und Weise chemisch versteift oder innerhalb der Faserwand quervernetzt wurden, daß die Fähigkeit dieser Fasern zur Ausbildung von Wasserstoffbrückenbindungen im feuchten Zustand signifikant reduziert ist, ebenfalls zum Einsatz kommen können, mit den Außenlagen unter Verwendung von Regeleinrichtungen
- gegebenenfalls Glättung,
- gegebenenfalls Prägung,
- Lagenverhaftung und
- Konfektion.

## Claims

1. Multi-layered sheet-form tissue product with at least three layers at least in part connected to one another with two optionally embossed predominantly cellulose-containing external layers and at least one optionally embossed internal layer predominantly containing natural fibres which originate, in particular, from wood and belong to the wood pulp group such as mechanical pulp, thermomechanical pulp, chemomechanical pulp or chemothermomechanical pulp (CTMP) and/or cellulose fibres which have been chemically saponified or crosslinked within the fibre wall such that the ability of these fibres to form hydrogen bridges in the moist state is significantly reduced, characterised in that only the external layers contain up to 8% by weight of a wet strengthening agent, based on the unprocessed tissue.

2. Tissue product according to claim 1, characterised in that the external layers contain 51 to 100% by weight of cellulose and 0 to 49% by weight of synthetic fibres or chemically modified fibres.

3. Tissue product according to claim 1, characterised in that the internal layer(s) contains 60 to 100% by weight of a wood pulp, in particular CTMP and/or cellulose fibres which have been chemically saponified or crosslinked within the fibre wall such that the ability of these fibres to form hydrogen bridges in the moist state is significantly reduced, and 0 to 40% by weight of cellulose.

4. Tissue product according to claims 1 to 3, characterised in that the cellulose is selected from softwood or hardwood cellulose or from synthetic fibres, chemically modified natural fibres or from a mixture of these types of cellulose.

5. Tissue product according to the preceding claims, characterised in that the wet strengthening agent is selected from anionically and cationically modified melamine/formaldehyde or urea/formaldehyde condensation products, polyamidoamine epichlorohydrin resins or polyalkylene polyamines.

6. Tissue product according to the preceding claims, characterised in that the weight per unit area of the external layers is 12 to 30 g/m², preferably 15 to 20 g/m².

7. Tissue product according to the preceding claims, characterised in that the weight per unit area of the internal layers is 16 to 40 g/m², preferably 18 to 30 g/m².

8. Tissue product according to the preceding claims, characterised in that it is a handkerchief, a cosmetic sheet, a toilet paper or a kitchen towel, in particular a kitchen towel.

9. Process for producing a multi-layered sheet-form tissue product according to claims 1 to 8, with at least three layers at least in part connected to one another , with two optionally embossed predominantly cellulose-containing external layers and at least one optionally embossed internal layer predominantly containing CTMP or other wood pulps and/or cellulose fibres which have been chemically saponified or crosslinked within the fibre wall such that the ability of these fibres to form hydrogen bridges in the moist state is significantly reduced, obtained by the following sequence of steps:
- preparation of two external layers containing at least one wet strengthening agent and of at least one HTCTMP/CTMP-containing internal layer which is free from wet strengthening agents, wherein other pulps and/or cellulose fibres which have been chemically saponified or crosslinked within the fibre wall such that the ability of these fibres to form hydrogen bridges in the moist state is significantly reduced can also be used
- bringing together of the HTCTMP/CTMP-containing internal layer(s), wherein other wood pulps and/or cellulose fibres which have been chemically saponified or crosslinked within the fibre wall such that the ability of these fibres to form hydrogen bridges in the moist state is significantly reduced can also be used, with the external layers using control systems
- optionally smoothing
- optionally embossing
- layer adhesion and
- making up.

## Revendications

1. Produit en tissu ouaté multicouche en forme de bande avec au moins trois couches reliées au moins partiellement les unes aux autres, avec deux couches extérieures, le cas échéant gaufrées, contenant de manière prépondérante de la cellulose et au moins une couche intérieure, le cas échéant gaufrée, contenant de manière prépondérante des fibres naturelles, qui proviennent en particulier du bois, qui sont comptées dans le groupe des pâtes mécaniques comme la pâte de râperie mécanique, la pâte mécanique thermomécanique, la pâte mécanique chimiomécanique ou la pâte mécanique chimiothermomécanique (CTMP) et/ou des fibres cellulosiques qui ont été rigidifiées chimiquement ou réticulées transversalement à l'intérieur du ruban de fibres de telle façon que la capacité de ces fibres à former des liaisons pontées d'hydrogène à l'état humide est réduite de manière significative,
caractérisé par le fait que seulement les couches extérieures contiennent jusqu'à 8% en poids, rapportés au tissu ouaté brut, d'un agent résistant à l'état humide.

2. Produit en tissu ouaté selon la revendication 1, caractérisé en ce que les couches extérieures contiennent de 51 à 100% en poids de cellulose et de 0 à 49% en poids de fibres synthétiques ou de fibres modifiées chimiquement.

3. Produit en tissu ouaté selon la revendication 1, caractérisé en ce que la (les) couche(s) intérieure(s) contient (contiennent) de 60 à 100% en poids d'une pâte mécanique, en particulier de CTMP et/ou de fibres cellulosiques qui ont été rigidifiées chimiquement ou réticulées transversalement à l'intérieur du ruban de fibres de telle façon que la capacité de ces fibres à former des liaisons pontées d'hydrogène à l'état humide est réduite de manière significative, ainsi que de 0 à 40% en poids de cellulose.

4. Produit de tissu ouaté selon les revendications 1 à 3, caractérisé en ce que la cellulose est choisie parmi des celluloses de bois feuillu ou de bois résineux ou parmi des fibres synthétiques, des fibres naturelles modifiées chimiquement ou parmi un mélange de ces espèces de celluloses.

5. Produit de tissu ouaté selon les revendications précédentes,
caractérisé en ce que l'agent résistant à l'état humide est choisi parmi des produits de condensation mélamine/formaldéhyde ou urée-formaldéhyde en modification anionique et cationique, des résines polyamidoamine-épichlorhydrine ou des polyalkylène-polyamine.

6. Produit de tissu ouaté selon les revendications précédentes,
caractérisé en ce que le grammage des couches extérieures est de 12 à 30 g/m², de préférence de 15 à 20 g/m².

7. Produit de tissu ouaté selon les revendications précédentes,
caractérisé en ce que le grammage des couches intérieures est de 16 à 40 g/m², de préférence de 18 à 30 g/m².

8. Produit de tissu ouaté selon les revendications précédentes,
caractérisé en ce qu'il s'agit d'un mouchoir, d'une serviette cosmétique, d'un papier hygiénique ou d'une serviette de ménage, en particulier d'une serviette de cuisine.

9. Procédé de fabrication d'un produit en tissu ouaté multicouche en forme de bande selon les revendications 1 à 8, avec au moins trois couches reliées au moins partiellement les unes aux autres, avec deux couches extérieures, le cas échéant gaufrées, contenant de manière prépondérante de la cellulose et au moins une couche intérieure, le cas échéant gaufrée, contenant de manière prépondérante des CTMP ou des pâtes mécaniques accessoires et/ou des fibres cellulosiques qui ont été rigidifiées chimiquement ou réticulées transversalement à l'intérieur du ruban de fibres de telle façon que la capacité de ces fibres à former des liaisons pontées d'hydrogène à l'état humide est réduite de manière significative, obtenu par la succession d'étapes suivante :
- mise à disposition de deux couches extérieures contenant au moins un agent résistant à l'état humide ainsi que d'au moins une couche intérieure contenant des HTCTMP / CTMP et exempte d'agent résistant à l'état humide, des pâtes mécaniques et/ou des fibres cellulosiques auxiliaires qui ont été rigidifiées chimiquement ou réticulées transversalement à l'intérieur du ruban de fibres de telle façon que la capacité de ces fibres à former des liaisons pontées d'hydrogène à l'état humide est réduite de manière significative pouvant également être utilisées,
- réunion de la (les) couche(s) intérieure(s) contenant des HTCTMP/CTMP, des pâtes mécaniques et/ou des fibres cellulosiques auxiliaires qui ont été rigidifiées chimiquement ou réticulées transversalement à l'intérieur du ruban de fibres de telle façon que la capacité de ces fibres à former des liaisons pontées d'hydrogène à l'état humide est réduite de manière significative pouvant également être utilisées, avec les couches externes en utilisant des systèmes régulateurs,
- le cas échéant lissage,
- le cas échéant gaufrage,
- fixation des couches et
- confection.
